# FASCICULE DE BREVET EUROPEEN

(11) **EP 1 424 531 B1**
(45) Date de publication et mention de la délivrance du brevet: **22.10.2008**
(21) Numéro de dépôt: 03027041.7
(22) Date de dépôt: 24.11.2003
(51) Int. Cl.: F28D 7/00, F28F 1/02, F28D 20/02

(54) **Echangeur de chaleur à inertie thermique pour circuit de fluide caloporteur, notamment de véhicule automobile**
Thermisch träger Wärmetauscher für Wärmeträgerkreislauf, insbesondere in Kraftfahrzeugen
Thermally inert heat exchanger for circuit of heat transfer fluid, particularly of vehicles

(30) Priorité: 29.11.2002 FR 0215034
(43) Date de publication de la demande: 02.06.2004
(73) Titulaire: VALEO SYSTEMES THERMIQUES, 78320 Le Mesnil Saint-Denis (FR)
(72) Inventeur: Haller, Régine, 78490 Boissy Sans Avoir (FR); Loup, Didier, 78310 Maurepas (FR); Lepetit, Loic, 92800 Puteaux (FR); Petit, Christian, 78160 Marly Le Roi (FR)

(56) Documents cités:
- EP-A- 1 221 389
- DE-A- 10 045 175
- GB-A- 1 586 469
- US-A- 5 186 242
- US-A1- 2002 002 837
- PATENT ABSTRACTS OF JAPAN vol. 009, no. 073 (M-368), 3 avril 1985 (1985-04-03) -& JP 59 205591 A (NIPPON DENSO KK), 21 novembre 1984 (1984-11-21)

## Description

L'invention se rapporte au domaine des échangeurs de chaleur, notamment de véhicules automobiles.

Elle concerne plus particulièrement un échangeur de chaleur pour un circuit de fluide parcouru par un fluide caloporteur, comprenant au moins un collecteur délimitant une entrée et une sortie pour le fluide caloporteur, des canaux de circulation du fluide caloporteur interposés entre l'entrée et la sortie, ainsi que des surfaces d'échange de chaleur associées aux canaux de circulation du fluide caloporteur et propres à être balayées par un flux d'air à traiter.

Dans le cas particulier d'un véhicule automobile, l'échangeur de chaleur peut être réalisé, par exemple, sous la forme d'un évaporateur de climatisation parcouru par un fluide réfrigérant afin de refroidir le flux d'air et produire de l'air climatisé qui est envoyé dans l'habitacle du véhicule. L'échangeur de chaleur peut aussi être réalisé sous la forme d'un radiateur de chauffage, encore appelé aérotherme, parcouru par un fluide chauffant, habituellement le fluide refroidissement du moteur du véhicule, afin de réchauffer le flux d'air et produire de l'air chaud qui est envoyé dans l'habitacle.

Dans un circuit de climatisation classique, le fluide réfrigérant traverse, dans cet ordre, un compresseur, un condenseur, un détendeur et un évaporateur, avant de retourner au compresseur. Dans l'évaporateur, le fluide réfrigérant passe d'une phase liquide ou d'une phase liquide/vapeur à une phase vapeur en absorbant de la chaleur au flux d'air qui se trouve ainsi refroidi. Un tel circuit classique est parcouru habituellement par un fluide réfrigérant constitué par un hydrocarbure fluoré tel que celui connu sous la désignation R 134 A.

On connaît aussi des circuits de climatisation parcourus par un fluide réfrigérant du type supercritique, comme par exemple le CO2.

L'un des inconvénients des évaporateurs connus réside dans le fait que leur capacité à refroidir le flux d'air dépend du fonctionnement du compresseur. Autrement dit, le flux d'air n'est plus refroidi dès lors que le compresseur est arrêté.

Or, dans la plupart des véhicules automobiles, le compresseur est entraîné par l'intermédiaire du moteur et est donc mis hors de fonctionnement dès que le moteur se trouve arrêté.

Dans le cadre des normes anti-pollution, on envisage de réaliser des véhicules automobiles du type "stop-start" (terme anglo-saxon signifiant "arrêt-démarrage") qui assurent un arrêt du moteur à combustion interne lorsque le véhicule est au point mort, puis un redémarrage du moteur quand cela est nécessaire, grâce à un alterno-démarreur. Il en résulte que lorsqu'un véhicule de ce type est au point mort, le moteur à combustion interne étant arrêté, la climatisation se trouve aussi à l'arrêt. L'arrêt du moteur à combustion interne a pour conséquence l'arrêt du compresseur, d'où une sensation d'inconfort pour le ou les passagers du véhicule.

Pour surmonter cet inconvénient, il a déjà été proposé de réaliser des circuits de climatisation qui comprennent, en dehors de l'évaporateur, des moyens auxiliaires pour produire du froid et qui consistent à prévoir, par exemple, une réserve de glace qui permet de refroidir le flux d'air lorsque l'évaporateur n'est pas en fonctionnement. Ces solutions connues sont encombrantes et complexes à réaliser et s'avèrent difficilement compatibles avec les véhicules modernes, dans lesquels la place dévolue aux différents équipements, notamment dans le compartiment moteur, est de plus en plus restreinte.

Un problème analogue peut se poser dans le cas où l'échangeur de chaleur est réalisé sous la forme d'un radiateur de chauffage parcouru par un fluide chauffant du fait que ce fluide est mis en mouvement par une pompe, appelée aussi "pompe à eau", qui est classiquement entraînée par le moteur à combustion interne du véhicule. Ainsi, l'arrêt du moteur a pour conséquence l'arrêt de la pompe et donc l'arrêt de la circulation du fluide, d'où une sensation d'inconfort, spécialement lorsque la températue extérieure est très basse.

Afin de surmonter les inconvénients précités, le document EP 1 221 389 propose des moyens de stockage thermique pour stocker soit du froid (c'est-à-dire des frigories), soit au contraire de la chaleur (c'est-à-dire des calorie) quand le moteur du véhicule interne fonctionne et de restituer cette énergie (froid ou chaleur) dans l'habitacle quand le moteur est à l'arrêt.

Ce document propose à cet effet un évaporateur du type défini plus haut, lequel comprend en outre des cavités qui sont agencées pour contenir un fluide de stockage thermique, sont situées adjacentes aux canaux de circulation du fluide caloporteur, et sont aussi associées aux surfaces d'échange de chaleur, de manière que le fluide de stockage thermique soit capable d'échanger de la chaleur avec le flux d'air qui balaie les surfaces d'échanges de chaleur, en cas d'arrêt momentané de la circulation du fluide caloporteur dans le circuit.

Ainsi, l'échangeur de chaleur intègre des cavités remplies d'un fluide de stockage thermique, qui forment une réserve de ce fluide, et qui sont adjacentes aux canaux de circulation du fluide caloporteur.

De la sorte, on favorise un échange thermique entre trois fluides, à savoir le fluide caloporteur (fluide réfrigérant, respectivement fluide chauffant), le fluide de stockage thermique et l'air à traiter (refroidir, respectivement réchauffer).

L'échangeur de chaleur selon l'invention comprend en outre un collecteur qui comporte un couvercle agencé sur une plaque collectrice formée par une superposition de plaques, le couvercle délimitant deux conduits longitudinaux communiquant par des passages avec les cavités des tubes afin d'établir une communication entre les cavités des différents tubes, les conduits et les passages étant constitués par des ouvertures de forme appropriée aménagées au travers le's plaques empilées constituant la plaque collectrice.

L'invention trouve un intérêt tout particulier dans le cas où l'échangeur de chaleur est un évaporateur de climatisation.

Ainsi, lorsque l'évaporateur est en fonctionnement, c'est-à-dire lorsque le fluide réfrigérant circule sous l'action du compresseur, l'évaporateur produit du froid. Cela permet à la fois de refroidir le flux d'air à envoyer dans l'habitacle du véhicule, mais aussi de solidifier le fluide à changement de phase ou de le maintenir dans cet état solidifié.

De la sorte, dès que la circulation du fluide réfrigérant est arrêtée et que l'évaporateur n'est plus en mesure de refroidir le flux d'air, c'est le fluide de stockage thermique qui prend le relais. Autrement dit, le flux d'air est refroidi par échange thermique avec le fluide de stockage thermique qui cède alors du froid au flux d'air. Le fluide de stockage thermique, qui est avantageusement un fluide à changement de phase, a alors tendance à fondre pour revenir à l'état liquide.

On procure ainsi un évaporateur avec une inertie thermique importante qui permet de refroidir le flux d'air même lorsque le moteur du véhicule est à l'arrêt pendant des durées pouvant atteindre et dépasser, par exemple, trente secondes.

L'invention trouve aussi son intérêt dans le cas où l'échangeur de chaleur est un radiateur de chauffage. En effet, lorsque le radiateur fonctionne et que le fluide chauffant circule sous l'action de la chaleur, le radiateur produit de la chaleur. Cela permet à la fois de réchauffer le flux d'air à envoyer dans l'habitacle, mais aussi de stocker de la chaleur dans le fluide de stockage thermique dont la température augmente et qui peut subir éventuellement un changement de phase.

Ainsi, dès lors que la circulation du fluide chauffant cesse et que le radiateur de chauffage n'est plus en mesure de réchauffer le flux d'air, c'est le fluide de stockage thermique qui prend le relais. Autrement dit, le flux d'air est réchauffé par échange thermique avec le fluide de stockage thermique qui lui cède alors de la chaleur. Le fluide de stockage thermique subit alors une baisse de température accompagnée éventuellement d'un changement de phase.

Dans ce cas, on procure un radiateur de chauffage avec une inertie thermique importante qui permet de réchauffer le flux d'air même lorsque le moteur du véhicule est momentanément à l'arrêt pendant une durée pouvant atteindre, par exemple, une minute.

Dans une forme de réalisation de l'invention, l'échangeur de chaleur comprend une multiplicité de tubes plats parallèles ayant deux grandes faces opposées et dans lesquels sont formés les canaux et les cavités, et une multiplicité d'intercalaires ondulés formant surfaces d'échange de chaleur qui sont disposés chacun entre deux tubes adjacents.

Dans cette première forme de réalisation de l'invention, le tube plat peut être composé de deux parties en forme de plaque, à savoir une partie dans laquelle sont formés les canaux et une partie dans laquelle sont formées les cavités.

En variante, chaque tube plat est monobloc, et les canaux sont disposés le long d'une des grandes faces, tandis que les cavités sont disposées le long de l'autre grande face.

Dans une autre variante, chaque tube plat est monobloc, tandis que les canaux sont disposés par groupes entre les grandes faces et que les cavités sont également disposées par groupes entre les grandes faces, les groupes de canaux alternant avec les groupes de cavités.

Dans une deuxième forme de réalisation de l'invention, l'échangeur de chaleur comprend une multiplicité de tubes plats en forme d'épingle ou de U dans lesquels sont formés les canaux et les cavités, et une multiplicité d'intercalaires ondulés formant surfaces d'échange de chaleur qui sont disposés chacun entre deux tubes adjacents. Dans cette forme de réalisation, chaque tube plat est avantageusement monobloc.

Dans une troisième forme de réalisation de l'invention, l'échangeur de chaleur comprend un tube plat en forme de serpentin dans lequel sont formés les canaux et les cavités. Dans ce cas, on prévoit avantageusement que le tube plat en forme de serpentin est formé d'une multiplicité de tubes intérieurs en U dans lesquels sont formés les canaux et d'un tube extérieur en serpentin qui contourne les tubes en U et dans lequel sont formées les cavités.

Dans les formes de réalisation précitées, qui sont données seulement à titre d'exemple, les tubes sont avantageusement formés par extrusion d'un matériau métallique, de préférence à base d'aluminium.

Dans le cas où l'échangeur de chaleur est un évaporateur agencé pour être parcouru par un fluide réfrigérant, le fluide de stockage thermique est avantageusement formé d'un fluide à changement de phase ayant une température de fusion comprise entre 0°C et 10°C, de préférence entre 5°C et 7°C.

Le fluide de stockage thermique est choisi avantageusement parmi des paraffines, des sels hydratés et des composés eutectiques ou tout autre fluide présentant un changement de phase dans cette plage de températures.

En variante, le fluide de stockage thermique peut être de l'eau, mais présente alors l'inconvénient de se dilater lorsqu'il passe de l'état liquide à l'état solide et de favoriser des phénomènes de givrage.

Dans le cas où l'échangeur est un radiateur de chauffage agencé pour être parcouru par un fluide chauffant, le fluide de stockage thermique constitue une réserve de chaleur (c'est-à-dire de calories), de manière que le fluide de stockage thermique soit capable de réchauffer le flux d'air qui balaie les surfaces d'échange de chaleur, en cas d'arrêt momentané de la circulation du fluide chauffant dans le radiateur de chauffage. Le fluide de stockage thermique est avantageusement un fluide à changement de phase ayant une température de fusion comprise entre 60 et 90°C, de préférence entre 70 et 80°C.

Le fluide de stockage thermique est avantageusement choisi parmi des paraffines, des sels hydratés et des composés eutectiques. Mais il peut aussi être constitué par de l'eau. Dans ce cas le fluide de stockage thermique ne subit pas de changement de phase, et le stockage thermique s'effectue seulement par chauffage sensible.

Dans la description qui suit, faite seulement à titre d'exemple, on se réfère aux dessins annexés, sur lesquels :
- la figure 1 est une vue latérale d'un échangeur de chaleur à tubes parallèles selon l'invention ;
- la figure 2 est une vue en coupe, à échelle agrandie, selon la ligne II-II de la figure 1 ;
- la figure 3 est un détail à échelle agrandie de la figure 2;
- la figure 4 est une vue en coupe longitudinale du collecteur de l'échangeur de chaleur de la figure 1 ;
- la figure 5 est une vue partielle en coupe, à échelle agrandie, selon la ligne V-V de la figure 4 ;
- la figure 6 est une vue partielle en coupe, à échelle agrandie, selon la ligne VI-VI de la figure 4 ;
- les figures 7 à 10 sont des vues en coupe de tubes propres à faire partie d'un échangeur de chaleur selon l'invention ;
- la figure 11 est une vue en coupe longitudinale d'un échangeur de chaleur à tubes en U selon l'invention ;
- la figure 12 est une vue en coupe longitudinale d'un échangeur de chaleur à tube en serpentin selon l'invention ; et
- la figure 13 est un graphique illustrant l'évolution de la température d'un flux d'air en sortie d'un évaporateur classique et d'un évaporateur à inertie selon l'invention, après arrêt du fonctionnement de l'évaporateur.

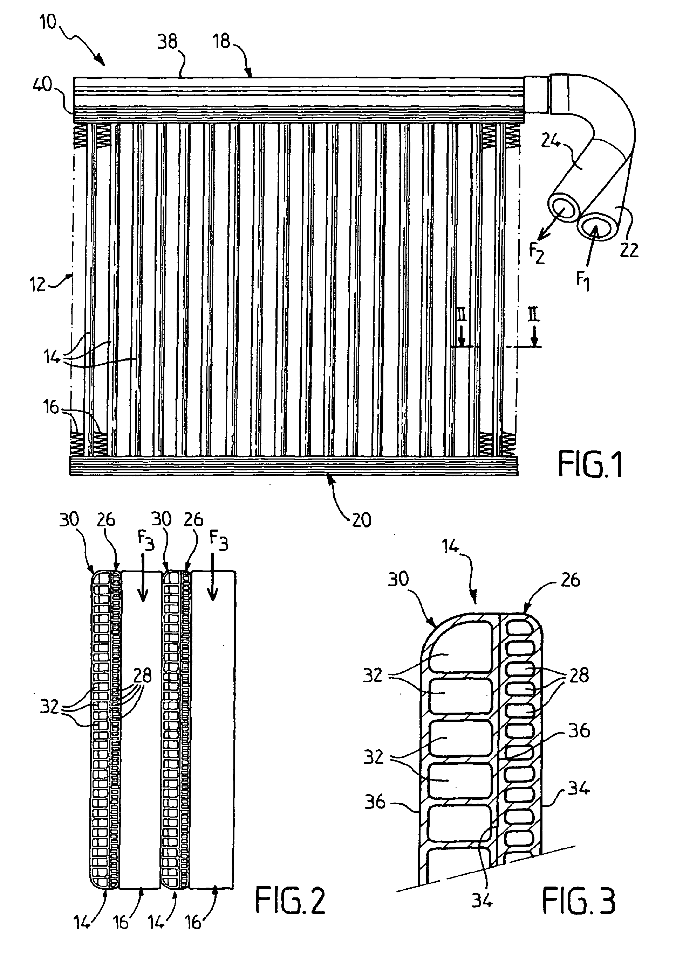

Dans la description détaillée qui suit, il est fait référence au cas particulier d'un évaporateur, mais les caractéristiques de celui-ci s'appliquent aussi à un radiateur de chauffage, comme mentionné ci-dessus. On se réfère d'abord à la figure 1 qui montre un évaporateur 10 propre à faire partie d'un circuit de climatisation classique (non représenté) de véhicule automobile, dans lequel un fluide réfrigérant traverse successivement un compresseur, un condenseur et un détendeur avant de gagner l'évaporateur puis de retourner vers le compresseur.

L'évaporateur 10 comprend un corps ou faisceau 12 formé d'une multiplicité de tubes parallèles 14 qui alternent avec des intercalaires ondulés 16 formant surfaces d'échange de chaleur. Le faisceau 12 est interposé entre deux collecteurs, à savoir un collecteur 18 placé ici en partie supérieure et un collecteur 20 placé ici en partie inférieure. Le collecteur 18 est muni d'une tubulure d'entrée 22 pour le fluide réfrigérant en phase liquide ou en phase liquide/vapeur et d'une tubulure de sortie 24 pour le fluide réfrigérant en phase gazeuse. Le fluide réfrigérant pénètre dans la tubulure 22 comme montré par la flèche F1 et ressort de la tubulure 24 comme montré par la flèche F2 après avoir échangé de la chaleur avec un flux d'air qui balaie le faisceau 12 comme montré par les flèches F3 sur la figure 2. Dans un évaporateur classique, les tubes 14 comportent des canaux de circulation pour le fluide réfrigérant qui vient ainsi échanger de la chaleur avec le flux d'air. Le fluide réfrigérant en phase liquide ou en phase liquide/vapeur se transforme en phase vapeur en absorbant de la chaleur, ce qui permet de refroidir le flux d'air. Autrement dit, le fluide réfrigérant cède des frigories au flux d'air pour produire un flux d'air réfrigéré ou climatisé qui est envoyé dans l'habitacle du véhicule.

Les tubes 14 de l'invention se différencient des tubes des évaporateurs classiques par le fait qu'ils offrent une double fonction, à savoir de permettre la circulation du fluide réfrigérant, mais aussi de permettre le stockage d'un fluide de stockage thermique qui, dans l'exemple, est un fluide à changement de phase. Par la suite il sera fait référence à un fluide à changement de phase, pour simplifier.

Comme on le voit aux figures 2 et 3, le tube 14 est composé de deux parties en forme de plaques, à savoir une première partie 26 dans laquelle sont formés des canaux 28 pour la circulation du fluide réfrigérant et une deuxième partie 30 dans laquelle sont formées des cavités 32, délimitant des alvéoles, et permettant le stockage du fluide à changement de phase.

La partie ou plaque 26 est réalisée par extrusion d'une matière métallique, de préférence d'aluminium ou d'alliage à base d'aluminium. Dans l'exemple, la partie ou plaque 26 comprend une rangée de canaux 28 ayant chacun une section de forme sensiblement rectangulaire et elle est délimitée par deux grandes faces parallèles 34.

La partie ou plaque 30 est également formée par extrusion d'un matériau métallique analogue et elle comprend une rangée de cavités 32 ayant chacune une section de forme généralement rectangulaire, sauf pour les cavités situées aux extrémités de la plaque 30. Cette plaque 30 est délimitée par deux grandes faces parallèles 36. L'une des grandes faces 34 de la plaque 26 est reliée à l'une des grandes faces 36 de la plaque 30 par exemple par brasage pour former un ensemble quasi monobloc. Il est avantageux également, pour faciliter la construction de l'évaporateur, de former des composants (voir figure 2) composés chacun d'un tube (partie 26 et partie 30) et d'un intercalaire ondulé 16. Les intercalaires ondulés 16 sont avantageusement formés d'un matériau métallique du même type.

Les canaux 28 ont des dimensions intérieures choisies et sont délimités par des parois d'épaisseurs choisies, tenant compte de la nature et des pressions de fonctionnement du fluide réfrigérant utilisé.

Ainsi, dans le cas d'un fluide réfrigérant classique, tel que le fluide R 134 A, les canaux 28 ont un diamètre hydraulique généralement compris entre 1 et 2 mm, les pressions d'éclatement devant se situer autour de 36 bars.

En revanche, dans le cas d'un fluide réfrigérant tel que le CO2, les canaux auront généralement des dimensions comprises entre 0,5 et 1 mm, les pressions d'éclatement devant se situer autour de 250 bars.

Les cavités 32 sont destinées à contenir un fluide de stockage thermique qui, dans l'exemple, est un fluide à changement de phase, c'est-à-dire un fluide dont la température de fusion sera comprise entre 0°C et 10°C.

Ainsi, lorsque l'évaporateur est en fonctionnement, c'est-à-dire que le fluide réfrigérant circule dans les canaux sous l'action du compresseur, celui-ci a une double fonction. D'une part il permet de refroidir le flux d'air à envoyer dans l'habitacle et d'autre part il permet de transformer ou de maintenir le fluide à changement de phase à l'état solide.

Par contre, dès que l'évaporateur est hors de fonctionnement et que le fluide réfrigérant ne circule plus dans les canaux, le fluide à changement de phase est en mesure de refroidir le flux d'air du fait des frigories qu'il a stockées. Il en résulte que ce fluide à changement de phase absorbe de la chaleur du flux d'air pour le refroidir, le fluide revenant au moins en partie à l'état liquide. Le fluide à changement de phase remplit les cavités 32 des tubes, et ces cavités peuvent communiquer entre elles, comme on le verra plus loin. En principe, ce fluide à changement de phase n'a pas à circuler dans l'évaporateur.

Le fluide à changement de phase peut être constitué par de l'eau, mais ceci a pour inconvénient que cette eau se dilate lorsqu'elle passe de l'état liquide à l'état solide et qu'elle peut générer des phénomènes de givrage.

On préfère utiliser des fluides à changement de phase dont la température de fusion est comprise entre 5°C et 7°C. Parmi les matériaux envisageables, on peut citer notamment des matériaux de la famille des paraffines, ou encore des sels hydratés et des composés eutectiques. Parmi les paraffines, on peut citer notamment celui désigné sous l'appellation commerciale RT5 de la société RUBITHERM.

Un matériau avantageux est une paraffine ayant un Δh de fusion = 150 Kj/kg et une densité égale à 0,8. On préfère utiliser des matériaux à changement de phase ayant une enthalpie de transformation supérieure ou égale à 150 Kj/kg. De préférence, la température de fusion sera supérieure à 0°C afin d'éviter les problèmes de givrage et surtout de ne pas trop pénaliser le cycle thermodynamique par une basse pression trop faible. D'autre part, la température de fusion sera de préférence inférieure à 10°C pour permettre d'obtenir, par récupération de l'énergie stockée, des températures suffisamment basses pour respecter les contraintes de confort.

A titre d'exemple, la section des cavités 32 peut avoir une longueur de l'ordre de 3 mm pour une largeur de l'ordre de 1 mm, ces dimensions étant bien sûr sujettes à variations. Ces dimensions ainsi que les épaisseurs des parois entourant les cavités 32 sont choisies en tenant compte aussi des contraintes de pressions. Les pressions du fluide à changement de phase sont beaucoup plus faibles, généralement inférieures à 5 bars.

La quantité totale de fluide à changement de phase dépend de l'énergie thermique (froid) que l'on cherche à transférer au flux d'air à envoyer dans l'habitacle. Ainsi, si l'on considère une énergie de 2500 watts pendant trente secondes, en partant d'un matériau à changement de phase ayant une enthalpie de transformation supérieure ou égale à 150 kJ/kg, cela conduit à 7,5 10⁴ J soit 0,5 kg et 0,625 litre pour un fluide ayant une densité égale à 0,8 comme indiqué plus haut. Autrement dit, il faut prévoir que le volume du fluide à changement de phase contenu dans les cavités 32 soit au moins égal à 0,625 litre.

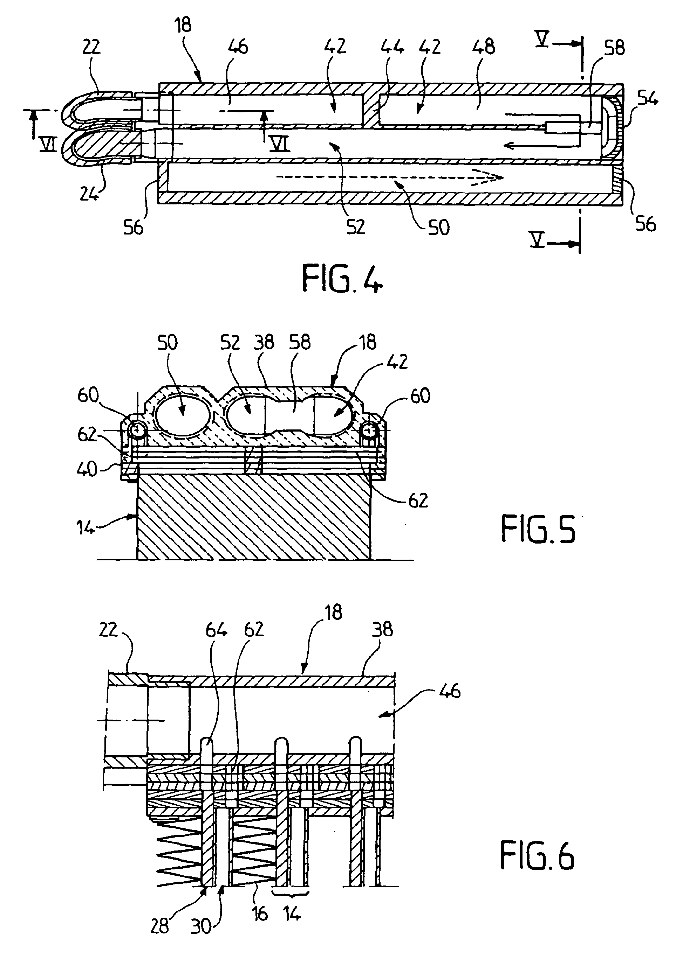

On se réfère maintenant aux figures 4 à 6 pour décrire plus particulièrement la structure du collecteur 18, dans l'exemple particulier de la figure 1. Le collecteur 18 comprend un couvercle 38 agencé sur une plaque collectrice 40 formée par la superposition de plusieurs plaques délimitant des ouvertures ou passages de circulation.

Le couvercle 38 a une forme allongée et délimite intérieurement trois conduits parallèles. Un premier conduit 42 est séparé et divisé par une cloison 44 pour former un compartiment d'entrée 46 et un compartiment intermédiaire 48. A l'opposé du conduit 42 se trouve un conduit 50 formant compartiment de circulation. Un autre conduit 52 placé entre les conduits 42 et 50 forme un compartiment intermédiaire. La tubulure d'entrée 22 communique avec le compartiment 46, tandis que la tubulure de sortie 24 communique avec le compartiment 52. Le compartiment 42 et le compartiment 52 sont fermés à une extrémité par un bouchon 54, tandis que le compartiment 50 est fermé à ses deux extrémités par des bouchons 56.

Le fluide réfrigérant circule en quatre passes à l'intérieur de l'évaporateur. Il pénètre tout d'abord dans le compartiment 46 pour gagner ensuite le compartiment 50 via le collecteur 20 puis le compartiment 48 via le même collecteur 20. De là, le fluide gagne le compartiment 52 par une ouverture 58 aménagé dans la cloison qui sépare les conduits 42 et 52, du côté du bouchon 54. Le fluide gagne ensuite la sortie 24.

Le collecteur 18 est formé par un empilage de plaques qui délimitent des passages appropriés (non représentés) pour faire communiquer le compartiment 46 avec le conduit 50 et le conduit 50 avec le conduit 48. On aperçoit sur la coupe de la figure 5 les conduits 42, 50 et 52 ainsi que le passage 58 entre les conduits 42 et 52.

Comme on le voit également sur la figure 5, le couvercle 38 du collecteur délimite deux conduits longitudinaux 60 qui communiquent par des passages 62 avec les cavités 32 des tubes 14. De la sorte, les deux conduits 60 permettent d'établir une communication entre les cavités 32 des différents tubes.

On aperçoit également sur la figure 6 des passages 64 qui permettent de faire communiquer les canaux 28 de circulation du fluide réfrigérant avec les conduits, en l'espèce avec le conduit 42 et plus particulièrement le compartiment d'entrée 46. Les passages 60 et 62 sont constitués par des ouvertures de forme appropriée, aménagées au travers des plaques empilées qui constituent la plaque collectrice 40.

Sur la figure 6, les canaux 28 de circulation du fluide réfrigérant n'apparaissent pas, la coupe étant réalisée au niveau d'une cloison transversale séparant deux canaux 28 adjacents.

Il doit être entendu que l'évaporateur 10 représenté aux figures 1 à 6 ne constitue qu'un exemple particulier d'échangeur ayant des tubes parallèles entre eux. Dans cet exemple particulier le fluide réfrigérant circule en quatre passes, mais il pourrait bien entendu circuler de façon différente.

De manière générale, la circulation du fluide caloporteur s'effectue comme dans un évaporateur classique. La différence principale résultant dans le fait que les canaux de circulation intègrent en outre des cavités destinées à contenir le fluide à changement de phase.

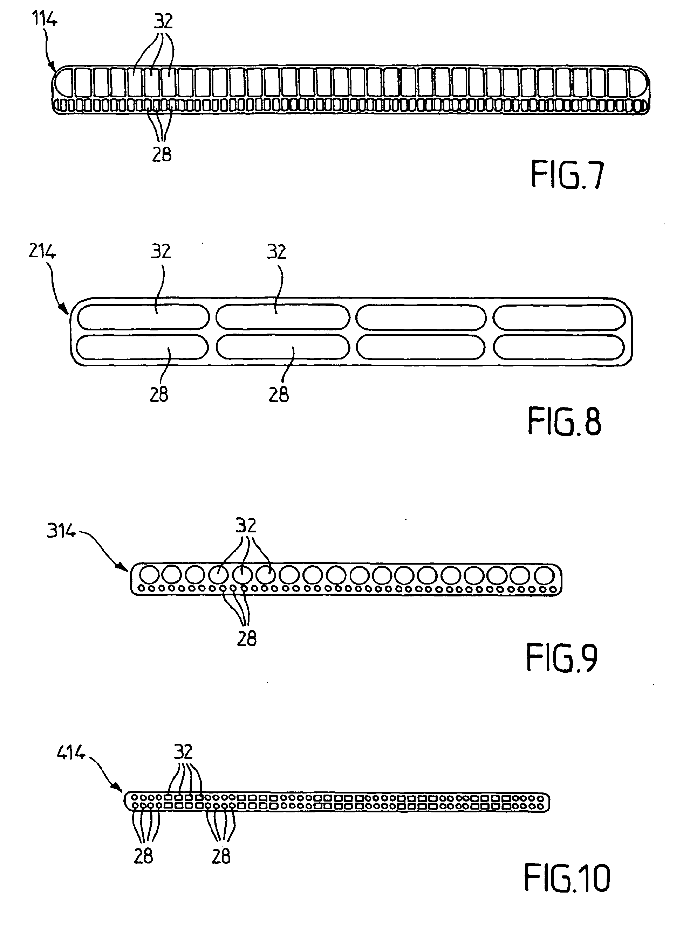

On se réfère maintenant à la figure 7 qui montre un tube 114 analogue au tube 14 des figures 1 à 3. La différence principale réside ici dans le fait que le tube 114 est réalisé d'une seule pièce par extrusion et non pas par l'assemblage de deux plaques comme précédemment. Le tube 114 est formé ici dans un matériau métallique analogue à celui déjà décrit.

Le conduit 114 de la figure 7 comprend une rangée de canaux 28 située près de l'une des grandes faces et une rangée de cavités 32 disposée près de l'autre grande face. Là aussi, les canaux et les cavités ont des dimensions choisies et sont séparés par des cloisons de dimensions choisies tenant compte des pressions de fonctionnement du fluide réfrigérant et du fluide à changement de phase.

Le tube 214 représenté à la figure 8 s'apparente à celui de la figure 7 et est aussi formé d'une seule pièce par extrusion. Il comporte, dans l'exemple, quatre canaux 28 disposés près de l'une des grandes faces et quatre cavités 32 disposées près de l'autre des grandes faces. Ces canaux et cavités ont des formes allongées, leur plus grande longueur s'étendant parallèlement à la direction des grandes faces du tube 214. Ici, les canaux 28 et les cavités 32 ont la même section transversale.

On se réfère maintenant à la figure 9 qui montre un autre tube 314 analogue à celui de la figure 7 et qui est aussi formé d'une seule pièce par extrusion. Il comprend une rangée de canaux 28 disposée près de l'une des grandes faces pour la circulation du fluide réfrigérant et une rangée de cavités 32 située près de l'autre des grandes faces pour la circulation du fluide à changement de phase. Dans cet exemple particulier, les canaux 28 ont une section circulaire dont le diamètre peut, par exemple, être de 0,85 mm. Les cavités 32 ont également une section de forme circulaire, le diamètre étant d'une valeur supérieure, par exemple de 3 mm.

On se réfère maintenant à la figure 10 qui montre un autre tube 414 également réalisé d'une seule pièce par extrusion. Ce tube comprend des canaux 28 disposés par groupes entre les deux grandes faces et des cavités 32 également disposées par groupes entre les deux grandes faces. Les groupes de canaux alternent avec les groupes de cavités. Par exemple, on trouve un groupe de huit cavités 32 disposées en deux rangées alternant avec un groupe de huit canaux 28 disposés en deux rangées. Les canaux 28 ont ici chacun une section circulaire dont le diamètre peut être, par exemple, de 0,85 mm. Dans cet exemple, les cavités 32 ont une section rectangulaire avec une longueur de 2,1 mm et une largeur de 0,85 mm.

Les figures 7 à 10 montrent des exemples, non limitatifs, de réalisation de tubes monobloc dans lesquels sont formés à la fois des canaux 28 de circulation du fluide réfrigérant et des cavités 32 contenant du fluide à changement de phase.

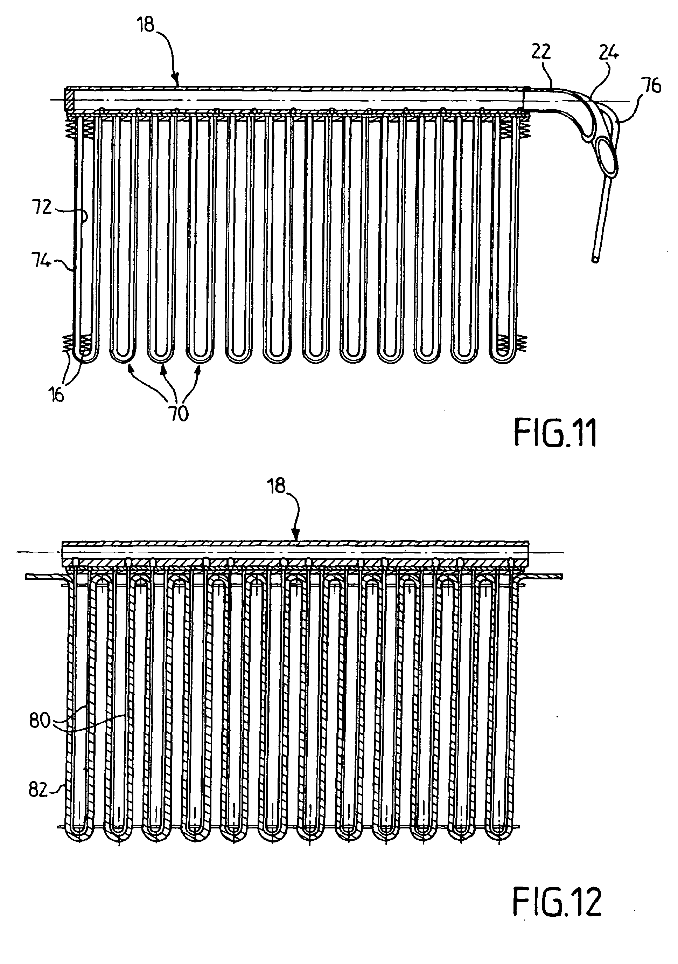

L'évaporateur représenté à la figure 11 comprend un seul collecteur 18 dans lequel débouchent une tubulure d'entrée 22 et une tubulure de sortie 24 pour la circulation du fluide réfrigérant. Dans cet exemple de réalisation, l'évaporateur comprend une pluralité de tubes 70 en forme de U ou d'épingle qui, comme dans le cas de la forme de réalisation précédente, permettent la circulation d'un fluide réfrigérant et le stockage d'un fluide à changement de phase. Chacun des tubes 70 comprend une partie intérieure 72 dans laquelle sont formées les cavités 32 (non visibles sur le dessin) pour stocker le fluide à changement de phase et une partie extérieure 74 contenant des canaux 28 (non visibles sur le dessin) pour la circulation du fluide réfrigérant.

Chacun des tubes 70 est avantageusement réalisé monobloc par extrusion d'un matériau métallique du type défini précédemment. Le fluide réfrigérant circule dans les canaux 28 en une ou plusieurs passes. D'autre part, le fluide à changement de phase est contenu dans les cavités 32, lesquelles communiquent entre elles par des passages appropriés du collecteur, et avec deux conduits 76, dont un seul apparaît sur la vue en coupe de la figure 11 . Entre les tubes et à l'intérieur des tubes en U sont prévus des intercalaires ondulés 16 analogues à ceux représentés à la figure 11.

Dans la forme de réalisation de la figure 12, l'évaporateur comprend un seul collecteur 18 dans lequel débouchent des tubes 80 en forme de U ou d'épingle qui contiennent des canaux 28 (non visibles sur le dessin) pour la circulation du fluide réfrigérant. Ces tubes en U ou épingle 80 sont entourés extérieurement par un tube unique 82, en forme de serpentin, dans lequel sont aménagées des cavités 32 (non visibles sur le dessin) qui contiennent le fluide à changement de phase.

Dans cette forme de réalisation, on constitue ici l'équivalent d'un serpentin, mais ce serpentin est formé d'une part des tubes 80 en forme de U et d'autre part du serpentin 82 qui entoure les tubes 80. Dans une variante de réalisation (non représentée) il serait possible de réaliser un serpentin unique incorporant les canaux et les cavités. Bien que cela ne soit pas représenté sur la figure 12, l'évaporateur peut incorporer en outre des intercalaires ondulés 16 analogues à ceux décrits précédemment.

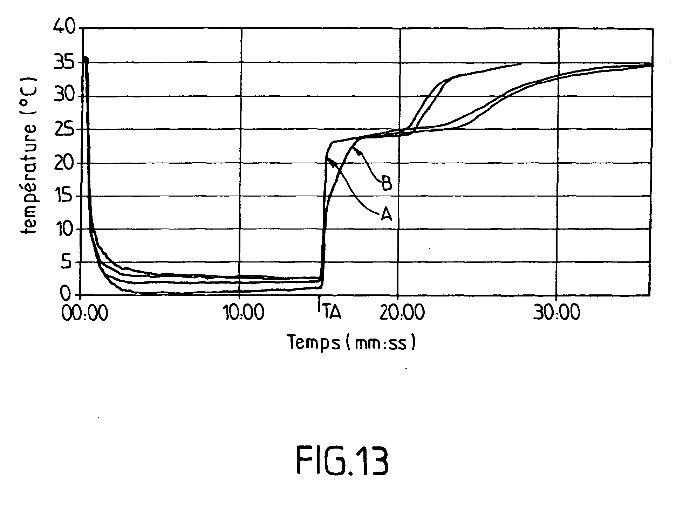

On se réfère maintenant à la figure 13 qui montre les variations de la température de l'air en sortie d'un évaporateur en fonction du temps, d'une part pour un évaporateur classique c'est-à-dire sans stockage de fluide à changement de phase (courbe A) et d'autre part pour un évaporateur selon l'invention avec stockage d'un fluide à changement de phase (courbe B). On part ici de l'hypothèse que la température de l'air extérieur est de 35°C et que l'humidité relative de l'air extérieur est de 40 %. Lorsque l'on démarre le circuit de climatisation, la température chute de 35°C pour atteindre très rapidement une température de sortie comprise entre 0°C et 5°C.

On arrête ensuite la climatisation au bout d'un temps TA d'environ 15 minutes. Dès que la climatisation est arrêtée, la température remonte dans les deux cas. Cependant, dans le cas d'un évaporateur classique, la remontée de température est beaucoup plus brutale, tandis que dans le cas d'un évaporateur selon l'invention, la courbe s'amplifie et l'on constate que le retour à une température proche de 35°C est beaucoup plus long.

Ceci montre que l'utilisation d'un évaporateur avec stockage de fluide à changement de phase, conformément à l'invention, permet de stocker de l'énergie thermique (frigories) et de la transférer au flux d'air après arrêt du fonctionnement de l'évaporateur.

L'invention s'applique aussi, comme déjà indiqué, à des radiateurs de chauffage parcourus par un fluide chauffant. le fluide de stockage thermique constitue alors une réserve de chaleur ou de calories. Ce fluide est alors avantageusement, mais pas obligatoirement, un fluide à changement de phase ayant une température de fusion comprise entre 60 et 90°C, de préférence entre 70 et 80°C. Ce fluide est alors avantageusement choisi parmi des paraffines, des sels hydratés et des composés eutectiques.

Parmi les paraffines, on peut citer notamment celles désignées sous les appellations commerciales RT65, RT80 et RT90 de la société RUBITHERM ou encore TH89 et TH58 de la société TEAP.

L'invention est susceptible de nombreuses variantes de réalisation. Elle s'applique plus particulièrement aux véhicules automobiles à moteurs à combustion interne, mais aussi à moteurs électriques ou hybrides.

## Revendications

1. Echangeur de chaleur pour un circuit de fluide parcouru par un fluide caloporteur, comprenant au moins un collecteur (18) délimitant une entrée (22) et une sortie (24) pour le fluide caloporteur, des canaux de circulation (14) du fluide caloporteur interposés entre l'entrée (22) et la sortie (24), des surfaces d'échange de chaleur (16) associées aux canaux de circulation du fluide caloporteur et propres à être balayées par un flux d'air à traiter, des cavités (32) agencées pour contenir un fluide de stockage thermique, disposées adjacentes aux canaux de circulation (14, 114...) du fluide caloporteur, et associées aux surfaces d'échange de chaleur (16), de manière que le fluide de stockage thermique soit capable d'échanger de la chaleur avec le flux d'air qui balaie les surfaces d'échanges de chaleur, en cas d'arrêt de la circulation du fluide caloporteur dans le circuit
**caractérisé en ce que** le collecteur (18) comporte un couvercle (38) agencé sur une plaque collectrice (40) formée par une superposition de plaques le couvercle (38) délimitant deux conduits longitudinaux (60) communiquant par des passages (62) avec les cavités (32) des tubes (14) afin d'établir une communication entre les cavités (32) des différents tubes, les conduits (60) et les passages (62) étant constitués par des ouvertures de forme appropriée aménagées au travers les plaques empilées constituant la plaque collectrice (40).

2. Echangeur de chaleur selon la revendication 1, **caractérisé en ce qu'**il comprend une multiplicité de tubes plats parallèles (14) ayant deux grandes faces opposées et dans lesquels sont formés les canaux (28) et les cavités (32), et une multiplicité d'intercalaires ondulés (16) formant surfaces d'échange de chaleur, qui sont disposées chacun entre deux tubes adjacents (14).

3. Echangeur de chaleur selon la revendication 2, **caractérisé en ce que** chaque tube plat (14) est composé de deux parties en forme de plaques, à savoir une partie (26) dans laquelle sont formés les canaux (28) et une partie (30) dans laquelle sont formées les cavités (32).

4. Echangeur de chaleur selon la revendication 2, **caractérisé en ce que** chaque tube plat (114, 214, 314) est monobloc, et **en ce que** les canaux (28) sont disposés le long d'une des grandes faces, tandis que les cavités (32) sont disposées le long de l'autre grande face.

5. Echangeur de chaleur selon la revendication 2, **caractérisé en ce que** chaque tube plat (414) est monobloc, **en ce que** les canaux (28) sont disposés par groupes entre les grandes faces, et **en ce que** les cavités (32) sont également disposées par groupes entre les grandes faces, les groupes de canaux alternant avec les groupes de cavités.

6. Echangeur de chaleur selon la revendication 1, **caractérisé en ce qu'**il comprend une multiplicité de tubes plats (70) en forme d'épingle ou de U dans lesquels sont formés les canaux (28) et les cavités (32), et une multiplicité d'intercalaires ondulés (16) formant surfaces d'échanges de chaleur qui sont disposés chacun entre deux tubes adjacents.

7. Echangeur de chaleur selon la revendication 6, **caractérisé en ce que** chaque tube plat en U (70) est monobloc.

8. Echangeur de chaleur selon la revendication 1, **caractérisé en ce qu'**il comprend un tube plat (80, 82) en forme de serpentin dans lequel sont formés les canaux (28) et les cavités (32).

9. Echangeur de chaleur selon la revendication 8, **caractérisé en ce que** le tube plat en forme de serpentin est formé d'une multiplicité de tubes intérieurs (80) en U dans lesquels sont formés les canaux (28) et d'un tube extérieur (82) en serpentin qui contourne les tubes en U et dans lequel sont formées les cavités (32).

10. Echangeur de chaleur selon l'une des revendications 2 à 9, **caractérisé en ce que** les tubes (14, 214...) sont formés par extrusion d'un matériau métallique, avantageusement à base d'aluminium.

11. Echangeur de chaleur selon l'une des revendications 1 à 10, **caractérisé en ce qu'**il est réalisé sous la forme d'un évaporateur agencé pour être parcouru par un fluide réfrigérant et pour refroidir le flux d'air qui balaie les surfaces d'échange de chaleur, et **en ce que** le fluide de stockage thermique est un fluide à changement de phase ayant une température de fusion comprise entre 0°C et 10°C, de préférence entre 5°C et 7°C, de manière que le fluide de stockage thermique soit capable de refroidir le flux d'air qui balaie les surfaces d'échanges de chaleur, en cas d'arrêt momentané de la circulation du fluide réfrigérant.

12. Echangeur de chaleur selon l'une des revendications 1 à 10, **caractérisé en ce qu'**il est réalisé sous la forme d'un radiateur de chauffage agencé pour être parcouru par un fluide chauffant et pour réchauffer le flux d'air qui balaie les surfaces d'échange de chaleur, et **en ce que** le fluide de stockage thermique constitue une réserve de chaleur, de manière que le fluide de stockage thermique soit capable de réchauffer le flux d'air qui balaie les surfaces d'échange de chaleur, en cas d'arrêt momentané de la circulation du fluide chauffant dans le radiateur de chauffage.

13. Echangeur de chaleur selon la revendication 12, **caractérisé en ce que** le fluide de stockage thermique est un fluide à changement de phase ayant une température de fusion comprise entre 60 et 90°C, de préférence entre 70 et 80°C.

14. Echangeur de chaleur selon l'une des revendications 11 à 13, **caractérisé en ce que** le fluide de stockage thermique est choisi parmi des paraffines, des sels hydratés et des composés eutectiques.

15. Echangeur de chaleur selon l'une des revendications 11 et 12, **caractérisé en ce que** le fluide de stockage thermique est de l'eau.

## Claims

1. Heat exchanger for a fluid circuit wherein a heat-carrying fluid circulates, comprising at least one manifold (18) defining an inlet (22) and an outlet (24) for the heat-carrying fluid, circulation channels (14) for the heat-carrying fluid interposed between the inlet (22) and the outlet (24), heat exchange surfaces (16) associated to the heat-carrying fluid circulation channels that may be swept by a flow of air that is to be treated, cavities (32) laid out so as to contain a heat storage fluid, positioned adjacent to the circulation channels (14, 114, etc.) of the heat-carrying fluid, and associated to the heat exchange surfaces (16), so that the heat storage fluid is capable of exchanging heat with the air flow that sweeps the heat exchange surfaces, in the event of the heat-carrying fluid no longer circulating in the circuit
**characterised in that** the manifold (18) comprises a cover (38), positioned on a collector plate (40) formed by a superposition of plates, wherein the cover (38) defines two longitudinal channels (60) which communicate by passages (62) with the cavities (32) of the tubes (14) in order to establish communication between the cavities (32) of the different tubes, wherein the channels (60) and passages (62) are formed by suitably shaped openings through the stacked plates forming the collector plate (40).

2. Heat exchanger according to claim 1, **characterised in that** it comprises a multiplicity of flat, parallel tubes (14) with two large opposite faces inside which are formed the ducts (28) and the cavities (32) and a multiplicity of rippled spacers (16) forming the heat exchange surfaces, which are each positioned between two adjacent tubes (14).

3. Heat exchanger of claim 2, **characterised in that** each flat tube (14) is made up of two parts in the form of plates, which is to say one part (26) inside which the ducts (28) are formed and one part (30) inside which the cavities (32) are formed.

4. Heat exchanger of claim 2, **characterised in that** each flat tube (114, 214, 314) is made of one piece, and **in that** the ducts (28) are positioned along one of the large faces, whereas the cavities (32) are positioned along the other large face.

5. Heat exchanger of claim 2, **characterised in that** each flat tube (414) is made of one piece, **in that** the ducts (28) are positioned in groups between the large faces and **in that** the cavities (32) are also positioned in groups between the large faces, wherein the groups of ducts alternate with the groups of cavities.

6. Heat exchanger of claim 1, **characterised in that** it comprises a multiplicity of flat tubes (70) in the form of a hairpin or a U inside which are formed the ducts (28) and the cavities (32), and a multiplicity of rippled spacers (16) forming the heat exchange surfaces that are each positioned between two adjacent tubes.

7. Heat exchanger of claim 6, **characterised in that** each U-shaped flat tube (70) is made of one piece.

8. Heat exchanger of claim 1, **characterised in that** it comprises a flat tube (80, 82) in the form of a coil inside which are formed the ducts (28) and the cavities (32).

9. Heat exchanger of claim 8, **characterised in that** the flat tube in the form of a coil is formed by a multiplicity of inner U-shaped tubes (80) inside which are formed the ducts (28) and an outer coiled tube (82) which passes around the U-shaped tubes and inside which are formed the cavities (32).

10. Heat exchanger of any of claims 2 to 9, **characterised in that** the tubes (14, 214, etc.) are formed by the extrusion of a metallic material, advantageously aluminium based.

11. Heat exchanger of any of claims 1 to 10, **characterised in that** it is made in the form of an evaporator laid out so that a coolant fluid can pass through it and to cool the flow of air which sweeps the heat exchange surfaces, and **in that** the heat storage fluid is a phase change fluid with a fusion temperature of between 0°C and 10°C, preferably between 5°C and 7°C, so that the heat storage fluid is able to cool the air flow which sweeps the heat exchange surfaces in the event of the circulation of the coolant fluid being momentarily interrupted.

12. Heat exchanger of any of claims 1 to 10, **characterised in that** it is made in the form of a heating radiator laid out so that a heating fluid can pass through it and to heat the flow of air which sweeps the heat exchange surfaces, and **in that** the heat storage fluid forms a heat reserve so that the heat storage fluid is able to heat the flow of air which sweeps the heat exchange surfaces in the event of the circulation of the heating fluid being momentarily interrupted in the heating radiator.

13. Heat exchanger of claim 12, **characterised in that** the heat storage fluid is a phase change fluid with a fusion temperature of between 60°C and 90°C, preferably between 70°C and 80°C.

14. Heat exchanger of any of claims 11 to 13, **characterised in that** the heat storage fluid is chosen from paraffins, hydrated salts and eutectic compounds.

15. Heat exchanger of any of claims 11 and 12, **characterised in that** the heat storage fluid is water.

## Patentansprüche

1. Wärmeaustauscher für einen Flüssigkeitskreislauf, der von einer Wärmeträgerflüssigkeit durchlaufen wird, umfassend mindestens einen Endboden (18), der einen Eintritt (22) und einen Austritt (24) für die Wärmeträgerflüssigkeit begrenzt, Durchflusskanäle (14) für die Wärmeträgerflüssigkeit, die zwischen dem Eintritt (22) und dem Austritt (24) eingesetzt sind, Wärmeaustauschflächen (16), die mit den Durchflusskanälen für die Wärmeträgerflüssigkeit verbunden sind und dazu dienen, von einem zu behandelnden Luftfluss gestreift zu werden, Hohlräume (32), die eingerichtet sind, um ein Wärmespeichermittel einzuschließen, und die angrenzend an die Durchflusskanäle (14, 114, ...) für die Wärmeträgerflüssigkeit angeordnet und mit den Wärmeaustauschflächen (16) verbunden sind, so dass das Wärmespeichermittel imstande ist, im Falle eines Durchflussstopps der Wärmeträgerflüssigkeit im Kreislauf, Wärme mit dem Luftfluss auszutauschen, der die Wärmeaustauschflächen streift,
**dadurch gekennzeichnet, dass** der Endboden (18) einen Deckel (38) umfasst, der auf einer Sammelplatte (40) angeordnet ist, die von übereinander gelagerten Platten gebildet wird, wobei der Deckel (38) zwei Längskanäle (60) begrenzt, die über Durchgänge (62) mit den Hohlräumen (32) der Rohre (14) verbunden sind, um eine Verbindung zwischen den Hohlräumen (32) der verschiedenen Rohre herzustellen, wobei die Kanäle (60) und die Durchgänge (62) von Öffnungen mit entsprechender Form gebildet werden, die durch die übereinander gestapelten Platten hindurch, welche die Sammelplatte (40) bilden, ausgebildet sind.

2. Wärmeaustauscher nach Anspruch 1, **dadurch gekennzeichnet, dass** er mehrere parallele Flachrohre (14) mit zwei großen, gegenüberliegenden Flächen umfasst, in denen die Kanäle (28) und Hohlräume (32) ausgebildet sind, sowie mehrere gewellte Zwischenlagen (16), die Wärmeaustauschflächen bilden und die jeweils zwischen zwei benachbarten Rohren (14) angeordnet sind.

3. Wärmeaustauscher nach Anspruch 2, **dadurch gekennzeichnet, dass** jedes Flachrohr (14) aus zwei plattenförmigen Teilen besteht, wobei in einem Teil (26) die Kanäle (28) und im anderen Teil (30) die Hohlräume (32) ausgebildet sind.

4. Wärmeaustauscher nach Anspruch 2, **dadurch gekennzeichnet, dass** jedes Flachrohr (114, 214, 314) einteilig ist, und **dadurch** dass die Kanäle (28) entlang einer der großen Flächen angeordnet sind, während die Hohlräume (32) entlang der anderen großen Fläche angeordnet sind.

5. Wärmeaustauscher nach Anspruch 2, **dadurch gekennzeichnet, dass** jedes Flachrohr (414) einteilig ist, **dadurch** dass die Kanäle (28) gruppenweise zwischen den großen Flächen angeordnet sind, und **dadurch** dass die Hohlräume (32) ebenfalls gruppenweise zwischen den großen Flächen angeordnet sind, wobei sich die Kanalgruppen mit den Hohlraumgruppen abwechseln.

6. Wärmeaustauscher nach Anspruch 1, **dadurch gekennzeichnet, dass** er mehrere haarnadelförmige oder U-förmige Flachrohre (70) umfasst, in denen die Kanäle (28) und Hohlräume (32) ausgebildet sind, sowie mehrere gewellte Zwischenlagen (16), die Wärmeaustauschflächen bilden und die jeweils zwischen zwei benachbarten Rohren angeordnet sind.

7. Wärmeaustauscher nach Anspruch 6, **dadurch gekennzeichnet, dass** jedes U-förmige Flachrohr (70) einteilig ist.

8. Wärmeaustauscher nach Anspruch 1, **dadurch gekennzeichnet, dass** er ein serpentinenförmiges Flachrohr (80, 82) umfasst, in dem die Kanäle (28) und Hohlräume (32) ausgebildet sind.

9. Wärmeaustauscher nach Anspruch 8, **dadurch gekennzeichnet, dass** das serpentinenförmige Flachrohr von mehreren U-förmigen Innenrohren (80), in denen die Kanäle (28) ausgebildet sind, und von einem serpentinenförmigen Außenrohr (82) gebildet wird, das die U-förmigen Rohre umgibt und in dem die Hohlräume (32) ausgebildet sind.

10. Wärmeaustauscher nach einem der Ansprüche 2 bis 9, **dadurch gekennzeichnet, dass** die Rohre (14, 214, ...) durch Extrusion eines metallischen Materials, vorteilhafterweise auf Aluminiumbasis, gebildet werden.

11. Wärmeaustauscher nach einem der Ansprüche 1 bis 10, **dadurch gekennzeichnet, dass** er in der Form eines Verdampfers ausgeführt und eingerichtet ist, um von einem Kältemittel durchlaufen zu werden und um den Luftfluss, der die Wärmeaustauschflächen streift, abzukühlen, und **dadurch** dass das Wärmespeichermittel ein Phasenübergangsmittel mit einem Schmelzpunkt zwischen 0°C und 10°C ist, vorzugsweise zwischen 5°C und 7°C, so dass das Wärmespeichermittel imstande ist, im Falle eines momentanen Durchflussstopps des Kältemittels, den Luftfluss, der die Wärmeaustauschflächen streift, abzukühlen.

12. Wärmeaustauscher nach einem der Ansprüche 1 bis 10, **dadurch gekennzeichnet, dass** er in der Form eines Heizkörpers ausgeführt und eingerichtet ist, um von einem Heizmittel durchlaufen zu werden und um den Luftfluss, der die Wärmeaustauschflächen streift, zu erwärmen, und **dadurch** dass das Wärmespeichermittel einen Wärmevorrat bildet, so dass das Wärmespeichermittel imstande ist, im Falle eines momentanen Durchflussstopps des Heizmittels im Heizkörper, den Luftfluss, der die Wärmeaustauschflächen streift, zu erwärmen.

13. Wärmeaustauscher nach Anspruch 12, **dadurch gekennzeichnet, dass das** Wärmespeichermittel ein Phasenübergangsmittel mit einem Schmelzpunkt zwischen 60 und 90°C ist, vorzugsweise zwischen 70 und 80°C.

14. Wärmeaustauscher nach einem der Ansprüche 11 bis 13, **dadurch gekennzeichnet, dass** das Wärmespeichermittel aus Paraffinen, Salzhydraten und eutektischen Verbindungen gewählt wird.

15. Wärmeaustauscher nach einem der Ansprüche 11 und 12, **dadurch gekennzeichnet, dass** das Wärmespeichermittel Wasser ist.
